# EUROPÄISCHE PATENTANMELDUNG

(11) **EP 1 538 403 A2**
(43) Veröffentlichungstag der Anmeldung: **08.06.2005**
(21) Anmeldenummer: 04028281.6
(22) Anmeldetag: 30.11.2004
(51) Int. Cl.: F24J 2/26

(54) **Plattenförmiger Strahlungsabsorber und Verfahren zu seiner Herstellung**

(30) Priorität: 03.12.2003 DE 10356874
(71) Anmelder: Drenkow, Frank, 38106 Braunschweig (DE)
(72) Erfinder: Drenkow, Frank, 38106 Braunschweig (DE)
(74) Vertreter: Neuhäuser, Uwe

(57) **Zusammenfassung**

Die Aufgabe, zum einen einen plattenförmigen Strahlungsabsorber (1) zu schaffen, der gegenüber herkömmlichen einen verbesserten Wirkungsgrad aufweist, einfach in der Herstellung und demgemäß kostengünstig ist sowie über eine verbesserte Optik seiner sichtbaren Oberfläche verfügt und zum anderen ein Verfahren zur Herstellung eines plattenförmigen Strahlungsabsorbers (1) anzugeben, wird im Wesentlichen dadurch gelöst, dass die Verbindungsabschnitte (2a, 2b) des Strahlungsabsorbers (1) als gesondert gefertigte Bauteile und jeweils mit parallel zur Längsachse der Absorberrohre (3) gerichteten abgestellten Randstegen (4, 5) ausgebildet sind/werden, wobei an jeweils benachbarte Randstege (4, 5) ein Absorberrohr (3) angeschlossen ist/wird und die Verbindungsabschnitte (2a, 2b) entweder über das Absorberrohr (3) oder direkt, besagten plattenförmigen Strahlungsabsorber (1) ausbildend, miteinander fest verbunden sind/werden.

## Beschreibung

Die Erfindung betrifft einen plattenförmigen Strahlungsabsorber und ein Verfahren zu seiner Herstellung nach dem Oberbegriff des Anspruchs 1 bzw. 21.

Wärmetauscher in Form von plattenförmigen Strahlungsabsorbern, auch als Sonnenkollektoren bezeichnet, sind seit geraumer Zeit bekannt. Im Wesentlichen sind dabei auf einem weitestgehend planen Absorberblech eine Mehrzahl von zueinander beabstandet angeordneten Absorberrohren, die ihrerseits über vom Absorberblech gebildete Verbindungsabschnitte verbunden sind, fest angeordnet. Die Absorberrohre dienen zur Aufnahme eines beispielsweise flüssigen Wärmeträgermediums, wie Wasser, und sind ferner an sogenannte Sammelrohre (Vor-, Rücklauf) angeschlossen.
Die Absorberrohre werden hierbei durch definierte Materialumformung einer Ausgangsplatine und nachfolgendes wasserdichtes und/oder luftdichtes Fügen der Verbindungsstöße derselben vorgefertigt und im Anschluß daran mit dem Absorberblech durch Löten oder Schweißen fest verbunden.
Überwiegend werden Absorberrohre vermittels einer Längsnaht auf ein entsprechendes Absorberblech aufgeschweißt oder aufgelötet.

Als nachteilig hat sich jedoch in diesem Fall herausgestellt, dass aufgrund der linienförmigen Verbindung zwischen dem Absorberblech und den Absorberrohren eine minimierte Wärmeübertragung auf das Speichermedium zu verzeichnen ist, welches den Wirkungsgrad derartiger Strahlungsabsorber erheblich herabsetzt.
Ferner zeichnen sich auf der Sichtseite des Absorberbleches undefinierte Sichtmarken ab, die den heutigen Designvorstellungen der Kunden von plattenförmigen Strahlungsabsorbern entgegenstehen.
Hier setzt die nachfolgend beschriebene Erfindung an.

Aufgabe der Erfindung ist es, einen plattenförmigen Strahlungsabsorber zu schaffen, der gegenüber herkömmlichen einen verbesserten Wirkungsgrad aufweist, einfach in der Herstellung und demgemäß kostengünstig ist sowie über eine verbesserte Optik seiner sichtbaren Oberfläche verfügt.

Ebenfalls ist es Aufgabe der Erfindung, ein einfaches und kostengünstiges Verfahren zur Herstellung eines derartigen plattenförmigen Strahlungsabsorbers anzugeben.

Ausgehend von einem plattenförmigen Strahlungsabsorber mit einer Mehrzahl in einer gemeinsamen Ebene angeordneter und über Verbindungsabschnitte miteinander verbundener sowie durch definierte Materialumformung und wasserdichtes und/oder luftdichtes Verbinden von Fügebereichen des umgeformten Materials hergestellter Absorberrohre, die ihrerseits an Sammelrohre angeschlossen sind, wird die Aufgabe erfindungsgemäß dadurch gelöst, dass die Verbindungsabschnitte als gesondert gefertigte Bauteile und jeweils mit parallel zur Längsachse der Absorberrohre gerichteten abgestellten Randstegen ausgebildet sind, wobei an jeweils benachbarte Randstege ein Absorberrohr angeschlossen ist und die Verbindungsabschnitte entweder über das Absorberrohr oder direkt, besagten plattenförmigen Strahlungsabsorber ausbildend, miteinander fest verbunden sind.

Gemäß einer ersten bevorzugten Ausgestaltung der Erfindung ist vorgesehen, dass die beiden benachbarten Randstege zwischen sich einen Anschlußsteg eines gesondert gefertigten Absorberrohres in Form eines vorgeformten oder bereits fertig ausgeformten sowie wasser- und/oder luftdicht zu einem im Querschnitt geschlossenen Hohlprofil gefügten Absorberrohres aufnehmen und an diesem befestigt sind.

Eine zweite bevorzugte Ausgestaltung der Erfindung sieht vor, dass wenigstens ein Randsteg eines Verbindungsabschnittes zu einem einstückig mit dem Verbindungsabschnitt ausgebildeten vorgeformten oder fertig ausgeformten sowie wasser- und/oder luftdicht zu einem im Querschnitt geschlossenen Hohlprofil gefügten Absorberrohr mit Anschlußsteg geformt und mit dem benachbarten Randsteg fest verbunden ist.

Insoweit wird ferner vogeschlagen, dass wenigstens einer der benachbarten Randstege derart ausgebildet ist, dass dieser den Anschlußsteg des Absorberrohres überlappt respektive abdeckt.

Nach einer dritten bevorzugten Ausgestaltung der Erfindung bilden stumpf aneinander gefügte benachbarte Randstege einen Stegverbund aus, an welchem seitlich ein Anschlußsteg eines gesondert gefertigten Absorberrohres in Form eines vorgeformten oder bereits fertig ausgeformten sowie wasser- und/oder luftdicht zu einem im Querschnitt geschlossenen Hohlprofil gefügten Absorberrohres befestigt ist.

In Weiterbildung der Erfindung wird des Weiteren vorgeschlagen, dass die Verbindungsabschnitte sowie die gesondert gefertigten Absorberrohre samt Anschlußsteg jeweils in ein oder mehreren Umformschritten aus einer Ausgangsplatine ausgeformt sind.

Weiterhin wird im Sinne der Erfindung vorgeschlagen, dass die ausgeformten Absorberrohre vorzugsweise im Bereich ihres ausgebildeten Anschlußsteges zu einem im Querschnitt geschlossenen Hohlprofil gefügt sind.

Als Fügeverfahren zur festen Verbindung der Verbindungsabschnitte und der Absorberrohre untereinander zu besagtem plattenförmigen Strahlungsabsorber sowie zur Erstellung eines im Querschnitt geschlossenen Hohlprofils der Absorberrohre bietet sich jeweils ein geeignetes Schweiß- oder Lötverfahren an.

Die Umformung der Ausgangsplatinen respektive Ausformung der Verbindungsabschnitte und Absorberrohre ist vorzugsweise durch Rollformen realisiert, wobei die Oberfläche derselben weitestgehend glatt oder konturiert ausgebildet sein kann.

Gemäß einer weiteren vorteilhaften Weiterbildung der Erfindung wird vorgeschlagen, dass zunächst vorgeformte Absorberrohre vermittels Innen-Hochdruck-Umformung (IHU) in ihre endgültige Form überführbar sind.

Die endgültig ausgeformten Absorberrohre weisen hierbei weitestgehend einen Querschnitt auf, der auf die Grundgeometrie eines Polygons, einer Ellipse oder auf jede andere, einen geschlossenen Querschnitt darstellende Grundgeometrie, vorzugsweise jedoch auf die Grundgeometrie eines Kreises, zurückgeführt ist.

Wie die Erfindung weiter vorsieht, können die Absorberrohre endseitig an gemeinsame Sammelrohre angeschlossen sein, die ihrerseits Aussparungen aufweisen, in denen die Absorberrohre einmünden.

Die luft- und/oder wasserdichte Verbindung zwischen den Absorberrohren und den Sammelrohren kann beispielsweise vermittels an sich bekannter Nippelelemente realisiert sein.

Fernerhin besteht auch die Möglichkeit, in den Sammelrohren zu den Absorberrohren korrespondierende Aussparungen einzubringen, die ihrerseits eine Schlitzverbindung zur formschlüssigen Aufnahme eines Endabschnittes des Absorberrohres samt Anschlußsteg aufweisen, wobei das Absorberrohr mit einer Durchströmöffnung versehen ist.

Wie die Erfindung noch vorsieht, können auch benachbarte Absorberrohre derart vermittels Nippelelementen strömungstechnisch verbunden sein, dass ein mäanderförmig geführtes Absorberrohr ausgebildet ist.

Als Fügeverfahren für die Verbindung der Absorberrohre mit den Sammelrohren oder untereinander respektive über Nippelelemente bietet sich vorzugsweise ein Lötverfahren an.

Die Absorberrohre, Verbindungsabschnitte und/oder Sammelrohre bestehen insoweit aus einem metallenen Werkstoff, vorzugsweise aus Kupfer.

Wie die Erfindung schließlich noch vorsieht, kann es angezeigt sein, wenigstens die Verbindungsabschnitte mit einer mindestens einseitigen Oberflächenbeschichtung zu versehen.

Das Verfahren zur Herstellung eines plattenförmigen Strahlungsabsorbers mit einer Mehrzahl in einer gemeinsamen Ebene angeordneter und über Verbindungsabschnitte miteinander verbundener sowie durch definierte Materialumformung und wasserdichtes und/oder luftdichtes Verbinden von Fügebereichen des umgeformten Materials hergestellter Absorberrohre, die ihrerseits an Sammelrohre anschließbar sind, zeichnet sich im Wesentlichen dadurch aus, dass die Verbindungsabschnitte als gesondert gefertigte Bauteile und mit jeweils mit parallel zur Längsachse der Absorberkanäle gerichteten abgestellten Randstegen ausgebildet werden, wobei an jeweils benachbarte Randstege ein Absorberrohr angeschlossen wird und die Verbindungsabschnitte entweder über das Absorberrohr oder direkt, besagten plattenförmigen Strahlungsabsorber ausbildend, miteinander fest verbunden werden.

Vorteilhafte Ausgestaltungen und Weiterbildungen des erfindungsgemäßen Verfahrens sind den nachgeordneten Unteransprüchen entnehmbar.

Die mit der Erfindung erzielten Vorteile bestehen im Hinblick auf den Stand der Technik im Wesentlichen darin, dass eine flächenförmige Verbindung zwischen den Verbindungsabschnitten und den Absorberrohren geschaffen wurde, die ihrerseits einen verbesserten Wärmeübergang von den Verbindungsabschnitten, die die maßgeblich wirksame Absorberfläche aufweisen, und den Absorberrohren zur Folge haben. Aufgrund der Tatsache, dass der plattenförmige Strahlungsabsorber mehrstükkig ausgebildet ist, können die einzelnen Bauteile zu verschiedenen Zeiten und an getrennten Orten gefertigt werden und brauchen lediglich im Rahmen einer Endfertigung, den Kundenwünschen entsprechend zu einem plattenförmigen Strahlungsabsorber komplettiert werden.

Die Erfindung wird nachstehend anhand der in den Zeichnungen schematisch dargestellten Ausführungsbeispiele näher erläutert. Es zeigen:
- Fig. 1: die äußerst schematische Darstellung eines erfindungsgemäß ausgebildeten plattenförmigen Strahlungsabsorbers im Querschnitt,
- Fig. 2: einen Verbindungsabschnitt des Strahlungsabsorbers nach Fig. 1 in einer Einzeldarstellung,
- Fig. 3: die schematische Darstellung des Zusammenbaus des Strahlungsabsorbers nach Fig. 1 (Variante 1),
- Fig. 4: einen besonders ausgebildeten Verbindungsabschnitt des Strahlungsabsorbers bezogen auf eine zweite Ausgestaltungsvariante desselben (Variante 2),
- Fig. 5: die schematische Darstellung des Zusammenbaus des Strahlungsabsorbers nach einer weiteren möglichen Ausgestaltungsvariante (Variante 3),
- Fig. 6: die Einzelheit "Z" nach Fig. 3,
- Fig. 7, 8: die Darstellung einzelner Umformschritte zur Erstellung eines Absorberrohres für einen Strahlungsabsorber nach Fig. 6,
- Fig. 9, 10: die Darstellung einzelner Umformschritte bezogen auf eine zweite mögliche Ausbildung eines Absorberrohres,
- Fig. 11: die Darstellung einer dritten möglichen Ausbildung eines Absorberrohres,
- Fig. 12: die Darstellung einer vierten möglichen Ausbildung eines Absorberrohres,
- Fig. 13: die perspektivische Ansicht einer ersten möglichen Ausbildung des Anschlußbereiches zwischen einem Absorberrohr und einem Sammelrohr,
- Fig. 14: die Einzelansicht des Absorberrohres nach Fig. 13,
- Fig. 15: die Seitenansicht nach Fig. 14,
- Fig. 16: die Draufsicht auf ein Sammelrohr mit der Darstellung einer weiteren möglichen Anschlußvariante zwischen einem Absorberrohr und einem Sammelrohr,
- Fig. 17: die Seitenansicht nach Fig. 16.

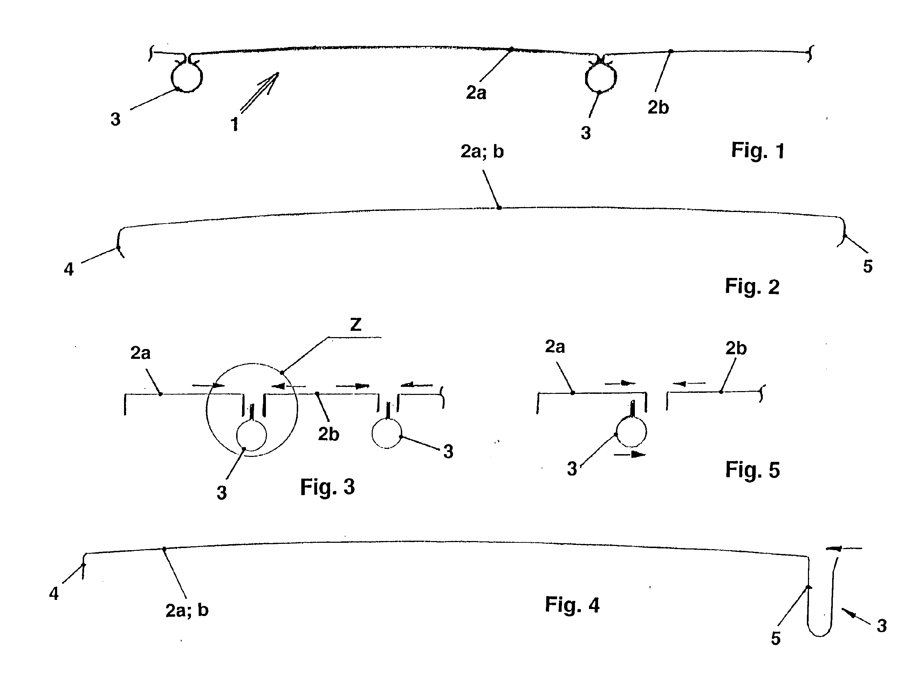

Fig. 1 zeigt zunächst einen plattenförmigen Strahlungsabsorber 1, der seinerseits eine Mehrzahl in einer gemeinsamen Ebene angeordnete und über sogenannte Verbindungsabschnitte 2a, 2b miteinander verbundene Absorberrohre 3 aufweist.

Wie besonders gut in Fig. 2 gezeigt, sind die Verbindungsabschnitte 2a, 2b erfindungsgemäß als gesondert gefertigte Bauteile und jeweils mit parallel zur Längsachse der Absorberrohre 3 abgestellten Randstegen 4, 5 ausgebildet, wobei an jeweils benachbarte Randstege 4, 5 das Absorberrohr 3 angeschlossen werden kann.

Die Randstege 4, 5 können ihrerseits wiederum an ihrem freien Ende eine Abwinkelung 6 aufweisen, woraus zum einen eine höhere Steifigkeit derselben resultiert. Zum anderen sind derartige Abwinkelungen 6 geeignet, im weiteren Fügeprozeß bei der formalen Zentrierung der Verbindungsabschnitte 2a, 2b unterstützend zu wirken.

Wie weiter aus Fig. 1 ersichtlich, sind die Verbindungsabschnitte 2a, 2b über das Absorberrohr 3, dasselbe zwischen sich aufnehmend und somit besagten plattenförmigen Strahlungsabsorber 1 ausbildend, miteinander fest verbunden.

Sowohl die Verbindungsabschnitte 2a, 2b als auch die Absorberrohre 3 werden gesondert voneinander, bevorzugt jeweils kontinuierlich in ein oder mehreren Umformschritten aus einer Ausgangsplatine, insbesondere aus einer Kupferblech-Platine, ausgeformt, da Kupfer über eine hohe Wärmeleitfähigkeit verfügt und sich ferner relativ leicht verarbeiten läßt. Sicherlich ist es auch denkbar, andere metallene oder nichtmetallene Werkstoffe für den Strahlungsabsorber 1 zu verwenden, vorausgesetzt, es wird das gewünschte Wärmeübertragungsvermögen gewährleistet.

Für die Praxis erscheint es insofern vorteilhaft, entsprechende Blechabschnitte von einem Coil abzuwickeln, abzulängen und ggf. vermittels mitlaufender Beschneidvorrichtungen zu beschneiden, sowie schon jetzt eventuell erforderliche Ausstanzungen, Freischnitte etc. vorzunehmen.

Als geeignetes Umformverfahren bietet sich das Rollformen an, wobei die Rollformwerkzeuge quer zur Durchlaufrichtung verschiebbar ausgeführt sein können, um ohne zusätzlichen Werkzeugwechsel beispielsweise unterschiedliche Profilbreiten der Verbindungsabschnitte 2a, 2b realisieren zu können. Die erzeugten Profile, insbesondere der Verbindungsabschnitte 2a, 2b, weisen aufgrund dieses gewählten Umformverfahrens vorteilhaft eine durchgängig gespannte Oberfläche auf, die wesentlich dazu beiträgt, undefinierte Ausbeulungen zu vermeiden. Dies bedeutet insbesondere auch, dass die Gefahr einer Deformation der Oberfläche der Verbindungsabschnitte 2a, 2b bei Herstellung und Einbau eines Strahlungsabsorbers 1 durch die gewonnenen Stabilität desselben maßgeblich reduziert ist.

Des Weiteren kann die Oberfläche der Verbindungsabschnitte 2a, 2b sowohl konvex als auch konkav gewölbt ausgebildet werden, so dass die nicht zu vermeidenden thermischen Schwankungen während des Betriebs des Strahlungsabsorbers 1 nicht zu Verwerfungen und/oder Verzug führen.

Ebenso ist es denkbar, statt einer weitestgehend glatten Oberfläche der Verbindungsabschnitte 2a, 2b und/oder der Absorberrohre 3 eine strukturierte Oberfläche, welches eine Oberfläche mit Sicken oder Wölbungen sein kann, vorzusehen (nicht näher gezeigt).

Durch diese Maßnahme kann vorteilhaft in den Verbund respektive in jede Einzelstruktur eine höhere Stabilität eingebracht werden. Des Weiteren wird durch eine solche in den Absorberrohren 3 erzeugte rauhe Oberfläche eine turbulente Strömung des Wärmeträgermediums erzeugt, welche ihrerseits mit einer verbesserten Wärmeaufnahme und -übertragung einhergeht. Zweckmäßigerweise sollten derartige Strukturen schon während des oben beschriebenen Profilierens durch besagtes Rollformen in die Oberfläche eingebracht werden.

Fig. 3 zeigt nunmehr schematisch den Zusammenbau des in Rede stehenden Strahlungsabsorbers 1 nach einer ersten Ausführungsvariante.
Danach ist das Absorberrohr 3 mit einem sich in Achsrichtung desselben erstreckenden sogenannten Anschlußsteg 7 ausgebildet. Die beiden benachbarten Randstege 4, 5 der Verbindungsabschnitte 2a, 2b nehmen, wie bereits oben beschrieben, den Anschlußsteg 7 zwischen sich auf und werden schließlich an demselben befestigt.

Denkbar ist es jedoch auch, nach einer zweiten und in Fig. 4 gezeigten Ausführungsvariante aus wenigstens einem Randsteg 4 eines Verbindungsabschnittes 2a, 2b ein Absorberrohr 3 mit Anschlußsteg 7 auszubilden, an welchem dann der benachbarte Randsteg 5, wie vorstehend beschrieben, befestigt werden kann.

Fig. 5 ist eine dritte Ausführungsvariante des Zusammenbaus zwischen zwei benachbarten Randstegen 4, 5 und einem Absorberrohr 3 zu entnehmen, wobei zunächst die beiden benachbarten Randstege 4, 5 der Verbindungsabschnitte 2a, 2b miteinander fest verbunden werden. An diese wird dann seitlich der Anschlußsteg 7 des Absorberrohres 3 angeschlossen.

Das Absorberrohr 3 hat seinerseits, wie oben bereits dargetan, durch Rollformen sein Gestalt erfahren, die ihrerseits aus einem Hohlprofil und besagtem Anschlußsteg 7 besteht. Im Anschluß daran wird das im Querschnitt noch offene Hohlprofil nach einem an sich bekannten Fügeverfahren wasser- und/oder luftdicht geschlossen, wobei sich im Rahmen von umfangreichen Versuchen als Fügeverfahren das Schweißen, vorzugsweise WIG-Schweißen, besonders bewährt hat.

Denkbar ist es jedoch auch, und wird durch die Erfindung mit erfaßt, das Hohlprofil vermittels eines an sich bekannten Lötverfahrens zu schließen.

Vorliegend wurde die Fügenaht im Bereich des ausgebildeten Anschlußsteges 7 ausgebildet. Sicherlich ist es demgegenüber auch möglich, an anderer Stelle, beispielsweise im Bereich der Kontur des Hohlprofils selbst, die Fügenaht vorzusehen.

Was das Absorberrohr 3 anbelangt, kann ein fertig ausgeformtes und wasser- und/oder luftdicht zu einem im Querschnitt geschlossenen Hohlprofil gefügtes oder ein zunächst vorgeformtes Absorberrohr 3 während des Zusammenbaus mit den Verbindungsabschnitten 2a, 2b Verwendung finden.

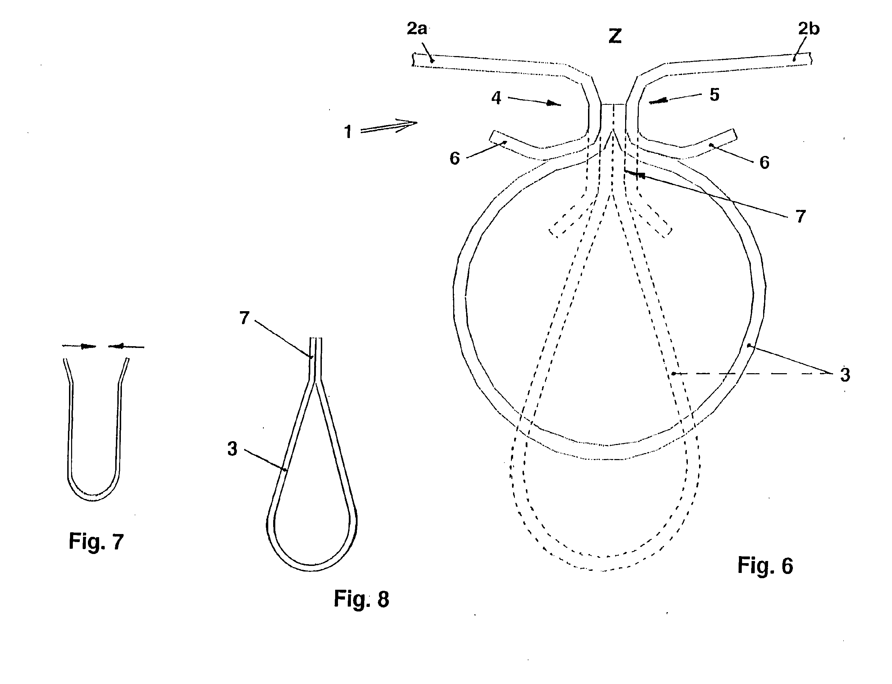

So kann, wie in den Fig. 6 bis 8 gezeigt, eine Ausgangsplatine zunächst U-förmig geformt (Fig. 7) und schließlich zu einem tropfenförmigen Hohlprofil mit Anschlußsteg 7 (Fig. 8) gebogen werden. Im Bereich des Anschlußsteges 7 wird das Hohlprofil durch Schweißen, vorzugsweise WIG-Schweißen, oder Löten wasser- und/oder luftdicht verschlossen und kann nachfolgend, wie oben beschrieben, mit den Randstegen 4, 5 der Verbindungsabschnitte 2a, 2b verbunden werden (Fig. 6).

Als Fügeverfahren zum festen Verbinden des Anschlußsteges 7 mit den Randstegen 4, 5 hat sich das Ultraschallschweißen besonders bewährt, jedoch können auch andere geeignete an sich bekannte Schweißverfahren oder auch das Löten zum Einsatz kommen und sind demgemäß durch die Erfindung mit erfaßt.

Das tropfenförmig vorgeformte Absorberrohr 3 kann nunmehr in seine gewünschte endgültige Form, beispielsweise eine weitestgehend kreisrunde Form, überführt werden, indem dieser einem sogenannten Innen-Hochdruck-Umformungs-Prozeß (IHU-Prozeß) unterzogen wird (Fig. 6). IHU-Prozesse sind zwar an sich bekannt, jedoch war es bisher unbekannt geblieben, vorgeformte Absorberrohre 3 eines plattenförmigen Strahlungsabsorbers 1 derart in ihre endgültige Form zu überführen.

Durch besagtes IHU-Verfahren werden Teilabschnitte der Randstege 4, 5 ebenfalls einer Umformung unterzogen, vorliegend nach innen umgebogen, wodurch sich diese eng an die Kontur des Absorberrohres 3 anschmiegen und dem Gesamtverbund eine zusätzliche hohe Steifigkeit verleihen.

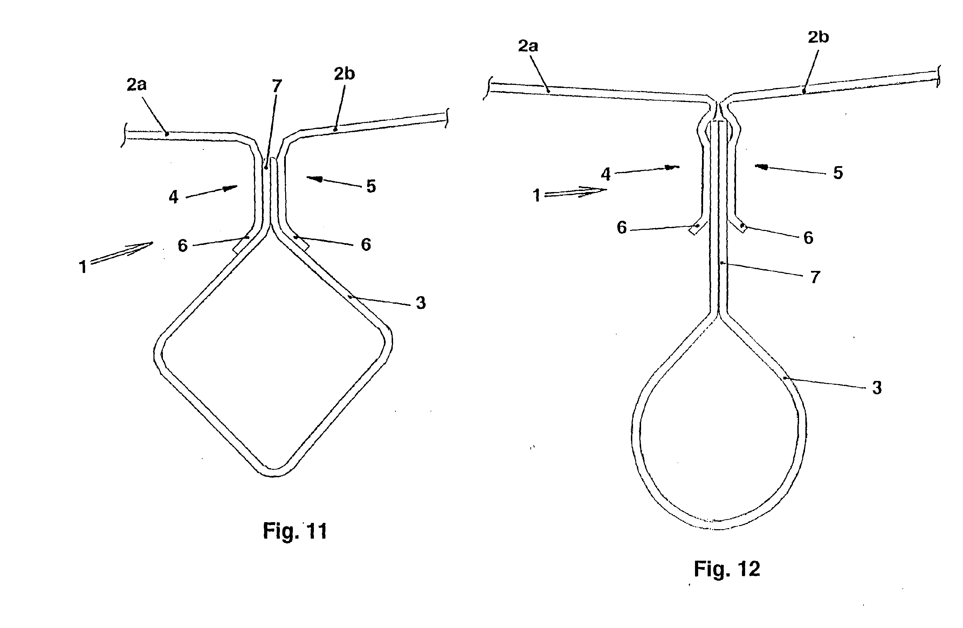

Demgegenüber kann es jedoch auch angezeigt sein, den Anschlußsteg 7 des Absorberrohres 3 derart langgestreckt auszubilden, dass während der Umformung des vorgeformten Absorberrohres 3 vermittels IHU eine Verformung der Randstege 4, 5 vermieden wird (Fig. 12).

Diese besondere Ausbildung des Absorberrohres 3 kann insbesondere dann von Vorteil sein, wenn man bestrebt ist, die Randstege 4, 5 mit einer besonderen Kontur zu versehen und dieselbe nicht durch eine nachfolgende Verformung, beispielsweise infolge vorstehenden IHU-Prozesses, nachteilig beeinflußt werden soll.

Bezug nehmend auf Fig. 12 kann ein oder können beide Randstege 4, 5 nämlich derart vorteilhaft ausgebildet werden, dass diese den Anschlußsteg 7 des Absorberrohres 3 überlappen respektive abdecken. Durch diese Maßnahme wird auf der Sichtfläche des Strahlungsabsorbers 1 eine definierte und besonders gefällige Stoßkante zwischen den beiden benachbarten Verbindungsabschnitten 2a, 2b des Strahlungsabsorbers 1 geschaffen.

Die Erfindung ist jedoch nicht auf kreisrunde Querschnitte des Absorberrohres 3 beschränkt, sondern es werden jedwede geeigneten geschlossenen Querschnitte mit erfaßt.

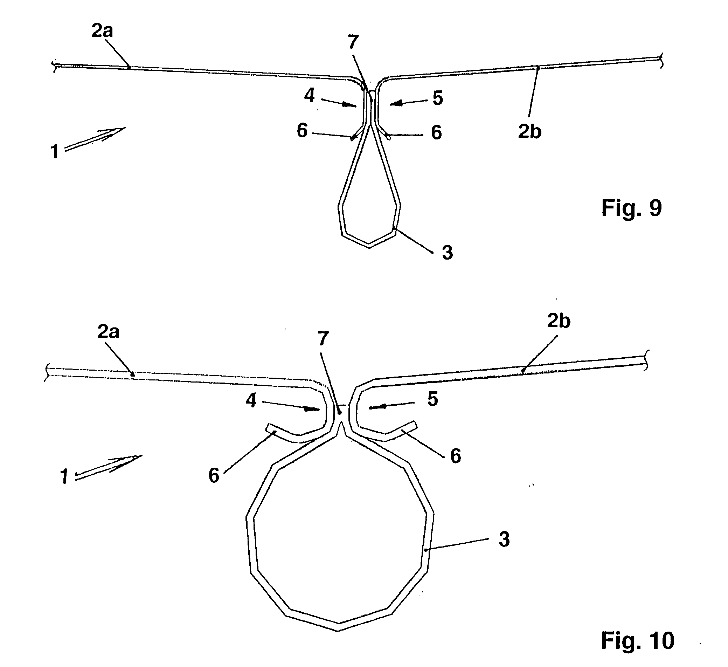

So kann das Absorberrohr 3 einen Querschnitt aufweisen bzw. das vorgeformte Absorberrohr 3 nach dem IHU-Verfahren in einen Querschnitt überführt werden, der auf die Grundgeometrie eines Polygons (Fig. 9, 10), eines auf einer Ecke stehenden Quadrats (Fig. 11), einer Ellipse o. a. zurückzuführen ist. Fig. 12 zeigt ferner einen tropfenförmigen Querschnitt eines Absorberrohres 3.

Bekanntermaßen sind die Absorberrohre 3 in einen Heizkreislauf oder einen Strömungskreislauf einer Wärmepumpe eingebunden, wobei sie jeweils endseitig an gemeinsame Sammelrohre 8 (Vor-, Rücklauf) angeschlossen sind.

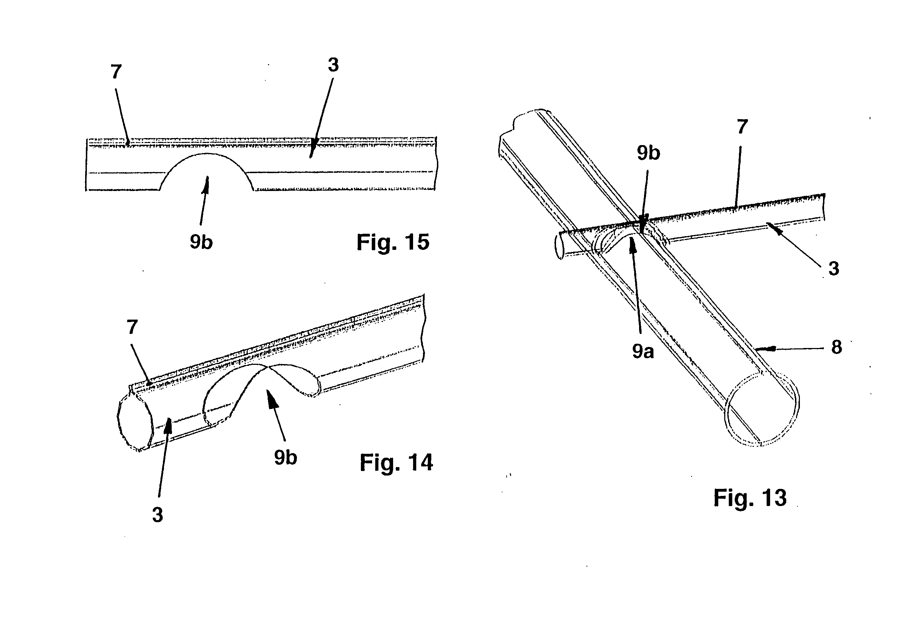

In Fig. 13 ist ein solches Sammelrohr 8 gezeigt, dass vorzugsweise ebenfalls aus Kupfer besteht und in welches Absorberrohre 3 einmünden.

Sammelrohr 8 und Absorberrohre 3 können ihrerseits vermittels an sich bekannter und nicht näher dargestellter Nippelelemente wasser- und/oder lufdichtdicht durch Schweißen oder Löten fest verbunden werden.

Gem. den Fig. 13 bis 15 weisen die Absorberrohre 3 und Sammelrohre 8 statt dessen in ihrer rohrförmigen Außenkontur zueinander korrespondierende Aussparungen 9a, b auf, die ihrerseits ineinandergreifen, und wasser- und/oder lufdichtdicht durch Schweißen oder Löten miteinander fest verbunden sind und demgemäß, nach außen hin abgedichtet, den Strömungsdurchfluß von flüssigem oder gasförmigem Wärmeträgermedium gewährleisten.

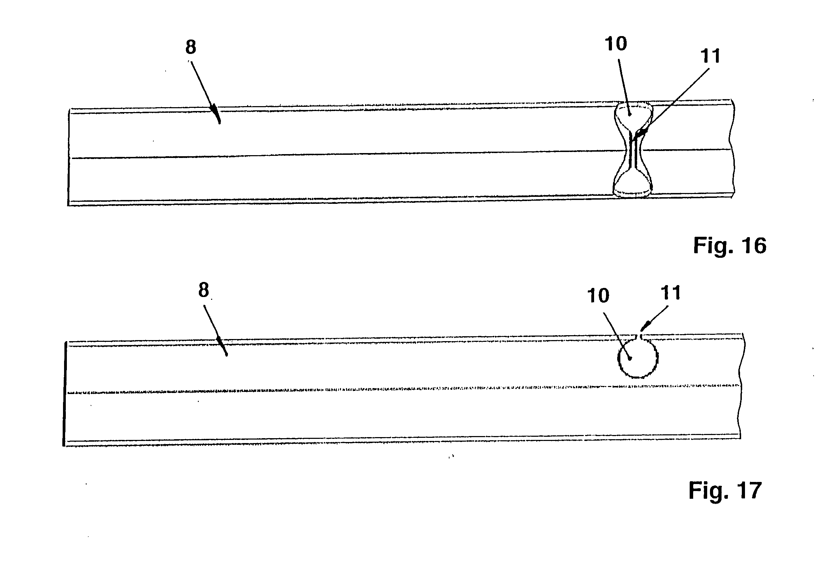

In den Fig. 16 und 17 ist eine weitere mögliche Anschlußvariante zwischen einem Sammelrohr 8 und einem nicht näher gezeigten Absorberrohr 3 gezeigt.

Danach sind in dem Sammelrohr 8, außermittig desselben, zur Außenkontur des Absorberrohres 3 korrespondierende Aussparungen 10 eingebracht, die ihrerseits eine Schlitzverbindung 11 zur formschlüssigen Aufnahme eines Endabschnittes eines nicht näher gezeigten Absorberrohres 3 mit weitestgehend kreisrunder Außenkontur sowie einen Anschlußsteg 7, wie beispielsweise in den Fig. 1, 3, 5 und 6 gezeigt, aufweisen, wobei das Absorberrohr 3 fernerhin mit einer entsprechenden Durchströmöffnung zur Gewährleistung des Strömungsdurchflusses von flüssigem oder gasförmigem Wärmeträgermedium versehen ist.

Unbeachtet ist bisher der wasser- bzw. luftdichte Abschluß von freien Enden der Absorberrohre 3 bzw. Sammelrohre 8 geblieben. Dieses kann wie an sich bekannt erfolgen, indem dieselben vermittels eines eingelöteten, eingeschweißten, eingeklebten oder sonstwie eingebrachten Stopfens, einen wasser- und/oder luftdichten Abschluß nach außen schaffend, verschlossen werden. Denkbar ist es jedoch auch und für den Fachmann sicherlich leicht nachvollziehbar, besagte freie Enden in geeigneter Weise umzuformen, beispielsweise zu quetschen und ggf. nachfolgend zu verlöten (nicht näher gezeigt).

Vorstehende Ausführungsbeispiele stellen auf einen Strahlungsabsorber 1 ab, der seinerseits Sammelrohre 8 (Vor-, Rücklauf) aufweist, in welche nach Art einer Parallelschaltung eine Mehrzahl von Absorberrohren 3 endseitig einmünden.

Die Erfindung erfaßt jedoch auch Strahlungsabsorber 1, die ihrerseits vermittels an sich bekannter Nippelelemente, vorzugsweise vermittels gekrümmt ausgebildeter und Endabschnitte benachbarter Absorberrohre 3 verbindender Nippelelemente, derart strömungstechnisch miteinander verbunden sind, dass ein mäanderförmig geführtes Absorberrohr 3 ausgebildet ist. D. h., eine Mehrzahl von an sich achsparallel zueinander angeordneten Absorberrohren 3 sind in Reihe hintereinander geschaltet.

Schließlich ist erwähnenswert, dass wenigstens die Verbindungsabschnitte 2a, 2b mit einer mindestens einseitigen Beschichtung, welches ein Schutzlack oder auch eine Wärmestrahlung besonders vorteilhaft absorbierende Beschichtung sein kann, versehen sind (nicht näher dargestellt).

Die Beschichtung auf die Oberfläche der Verbindungsabschnitte 2a, 2b kann dabei vorteilhaft nach einem PVD-Verfahren (physical vapour deposition) aufgebracht werden, indem das Ausgangsmaterial für besagte Beschichtung über die physikalischen Vorgänge des Verdampfens, beispielsweise vermittels Lichtbogen oder Elektronenstrahl, oder der Vorgänge der Kathodenzerstäubung im Hochvakuum in eine Dampfphase überführt werden und sich anschließend auf die Oberfläche der Verbindungsabschnitte 2a, 2b wieder niederschlagen. Die dabei erzeugten Schichtdicken bewegen sich überwiegend zwischen 1µm und 15µm.

## Patentansprüche

1. Plattenförmiger Strahlungsabsorber (1) mit einer Mehrzahl in einer gemeinsamen Ebene angeordneter und über Verbindungsabschnitte (2a, 2b) miteinander verbundener sowie durch definierte Materialumformung und wasserdichtes und/oder luftdichtes Verbinden von Fügebereichen des umgeformten Materials hergestellter Absorberrohre (3), die ihrerseits an Sammelrohre (8) anschließbar sind,
**dadurch gekennzeichnet, dass**
die Verbindungsabschnitte (2a, 2b) als gesondert gefertigte Bauteile und jeweils mit parallel zur Längsachse der Absorberrohre (3) gerichteten abgestellten Randstegen (4, 5) ausgebildet sind, wobei an jeweils benachbarte Randstege (4, 5) ein Absorberrohr (3) angeschlossen ist und die Verbindungsabschnitte (2a, 2b) entweder über das Absorberrohr (3) oder direkt, besagten plattenförmigen Strahlungsabsorber (1) ausbildend, miteinander fest verbunden sind.

2. Plattenförmiger Strahlungsabsorber (1) nach Anspruch 1,
**dadurch gekennzeichnet, dass**
die beiden benachbarten Randstege (4, 5) zwischen sich einen Anschlußsteg (7) eines gesondert gefertigten Absorberrohres (3) in Form eines vorgeformten oder bereits fertig ausgeformten sowie wasser- und/oder luftdicht zu einem im Querschnitt geschlossenen Hohlprofil gefügten Absorberrohres (3) aufnehmen und an diesem befestigt sind.

3. Plattenförmiger Strahlungsabsorber (1) nach Anspruch 1,
**dadurch gekennzeichnet, dass**
wenigstens ein Randsteg (4, 5) eines Verbindungsabschnittes (2a, 2b) zu einem einstückig mit dem Verbindungsabschnitt (2a, 2b) ausgebildeten vorgeformten oder fertig ausgeformten sowie wasser- und/oder luftdicht zu einem im Querschnitt geschlossenen Hohlprofil gefügten Absorberrohr (3) mit Anschlußsteg (7) geformt und mit dem benachbarten Randsteg (4, 5) fest verbunden ist.

4. Plattenförmiger Strahlungsabsorber (1) nach einem der Ansprüche 1 bis 3,
**dadurch gekennzeichnet, dass**
wenigstens einer der benachbarten Randstege (4, 5) derart ausgebildet ist, dass dieser den Anschlußsteg (7) des Absorberrohres (3) überlappt respektive abdeckt.

5. Plattenförmiger Strahlungsabsorber (1) nach Anspruch 1,
**dadurch gekennzeichnet, dass**
stumpf aneinander gefügte benachbarte Randstege (4, 5) einen Stegverbund ausbilden, an welchem seitlich ein Anschlußsteg (7) eines gesondert gefertigten Absorberrohres (3) in Form eines vorgeformten oder bereits fertig ausgeformten sowie wasser- und/oder luftdicht zu einem im Querschnitt geschlossenen Hohlprofil gefügten Absorberrohres (3) befestigt ist.

6. Plattenförmiger Strahlungsabsorber (1) nach einem der Ansprüche 1 bis 5,
**dadurch gekennzeichnet, dass**
die Verbindungsabschnitte (2a, 2b) sowie die gesondert gefertigten Absorberrohre (3) samt Anschlußsteg (7) jeweils in ein oder mehreren Umformschritten aus einer Ausgangsplatine ausgeformt sind.

7. Plattenförmiger Strahlungsabsorber (1) nach einem der Ansprüche 1 bis 6,
**dadurch gekennzeichnet, dass**
die ausgeformten Absorberrohre (3) vorzugsweise im Bereich ihres ausgebildeten Anschlußsteges (7) zu einem im Querschnitt geschlossenen Hohlprofil gefügt sind.

8. Plattenförmiger Strahlungsabsorber (1) nach einem der Ansprüche 1 bis 7,
**dadurch gekennzeichnet, dass**
als Fügeverfahren zur festen Verbindung der Verbindungsabschnitte (2a, 2b) und der Absorberrohre (3) untereinander zu besagtem plattenförmigen Strahlungsabsorber (1) sowie zur Erstellung eines im Querschnitt geschlossenen Hohlprofils der Absorberrohre (3) jeweils ein geeignetes Schweiß- oder Lötverfahren verwendet ist.

9. Plattenförmiger Strahlungsabsorber (1) nach einem der Ansprüche 1 bis 8,
**dadurch gekennzeichnet, dass**
die Umformung der Ausgangsplatinen respektive Ausformung der Verbindungsabschnitte (2a, 2b) und Absorberrohre (3) vorzugsweise durch Rollformen realisiert ist.

10. Plattenförmiger Strahlungsabsorber (1) nach einem der Ansprüche 1 bis 9,
**dadurch gekennzeichnet, dass**
die Oberfläche der Verbindungsabschnitte (2a, 2b) und/oder der Absorberrohre (3) weitestgehend glatt oder konturiert ausgebildet ist.

11. Plattenförmiger Strahlungsabsorber (1) nach einem der Ansprüche 1 bis 10,
**dadurch gekennzeichnet, dass**
zunächst vorgeformte Absorberrohre (3) vermittels Innen-Hochdruck-Umformung (IHU) in ihre endgültige Form überführbar sind.

12. Plattenförmiger Strahlungsabsorber (1) nach einem der Ansprüche 1 bis 11,
**dadurch gekennzeichnet, dass**
die endgültig ausgeformten Absorberrohre (3) weitestgehend einen Querschnitt aufweisen, der auf die Grundgeometrie eines Polygons, einer Ellipse oder auf jede andere, einen geschlossenen Querschnitt darstellende Grundgeometrie, vorzugsweise jedoch auf die Grundgeometrie eines Kreises, zurückgeführt ist.

13. Plattenförmiger Strahlungsabsorber (1) nach einem der Ansprüche 1 bis 12,
**dadurch gekennzeichnet, dass**
die Absorberrohre (3) endseitig an gemeinsame Sammelrohre (8) angeschlossen sind.

14. Plattenförmiger Strahlungsabsorber (1) nach Anspruch 13,
**dadurch gekennzeichnet, dass**
die Sammelrohre (8) Aussparungen (9a; 10) aufweisen, in denen die Absorberrohre (3) einmünden.

15. Plattenförmiger Strahlungsabsorber (1) nach einem der Ansprüche 13 und 14,
**dadurch gekennzeichnet, dass**
die luft- und/oder wasserdichte Verbindung zwischen den Absorberrohren (3) und den Sammelrohren (8) vermittels an sich bekannter Nippelelemente realisiert ist.

16. Plattenförmiger Strahlungsabsorber (1) nach einem der Ansprüche 13 und 14,
**dadurch gekennzeichnet, dass**
in den Sammelrohren (8) zu den Absorberrohren (3) korrespondierende Aussparungen (10) eingebracht sind, die ihrerseits eine Schlitzverbindung (11) zur formschlüssigen Aufnahme eines Endabschnittes des Absorberrohres (3) samt Anschlußsteg (7) aufweisen, wobei das Absorberrohr (3) mit einer Durchströmöffnung versehen ist.

17. Plattenförmiger Strahlungsabsorber (1) nach einem der Ansprüche 1 bis 12,
**dadurch gekennzeichnet, dass**
benachbarte Absorberrohre (3) derart vermittels Nippelelementen strömungstechnisch verbunden sind, dass ein mäanderförmig geführtes Absorberrohr (3) ausgebildet ist.

18. Plattenförmiger Strahlungsabsorber (1) nach einem der Ansprüche 13 bis 17,
**dadurch gekennzeichnet, dass**
Absorberrohre (3) mit den Sammelrohren (8) oder untereinander respektive über Nippelelemente nach einem Lötverfahren gefügt sind.

19. Plattenförmiger Strahlungsabsorber (1) nach einem der Ansprüche 1 bis 18,
**dadurch gekennzeichnet, dass**
die Absorberrohre (3), Verbindungsabschnitte (2a, 2b) und/oder Sammelrohre (8) aus einem metallenen Werkstoff, vorzugsweise aus Kupfer bestehen.

20. Plattenförmiger Strahlungsabsorber (1) nach einem der Ansprüche 1 bis 19,
**dadurch gekennzeichnet, dass**
wenigstens die Verbindungsabschnitte (2a, 2b) mit einer mindestens einseitigen Beschichtung versehen sind.

21. Verfahren zur Herstellung eines plattenförmigen Strahlungsabsorbers (1) mit einer Mehrzahl in einer gemeinsamen Ebene angeordneter und über Verbindungsabschnitte (2a, 2b) miteinander verbundener sowie durch definierte Materialumformung und wasserdichtes und/oder luftdichtes Verbinden von Fügebereichen des umgeformten Materials hergestellter Absorberrohre (3), die ihrerseits an Sammelrohre (8) anschließbar sind,
**dadurch gekennzeichnet, dass**
die Verbindungsabschnitte (2a, 2b) als gesondert gefertigte Bauteile und jeweils mit parallel zur Längsachse der Absorberrohre (3) gerichteten abgestellten Randstegen (4, 5) ausgebildet werden, wobei an jeweils benachbarte Randstege (4, 5) ein Absorberrohr (3) angeschlossen wird und die Verbindungsabschnitte (2a, 2b) entweder über das Absorberrohr (3) oder direkt, besagten plattenförmigen Strahlungsabsorber (1) ausbildend, miteinander fest verbunden werden.

22. Verfahren nach Anspruch 21,
**dadurch gekennzeichnet, dass**
zwischen zwei benachbarten Randstegen (4, 5) ein Anschlußsteg (7) eines gesondert gefertigten Absorberrohres (3) in Form eines vorgeformten oder bereits fertig ausgeformten sowie wasser- und/oder luftdicht zu einem im Querschnitt geschlossenen Hohlprofil gefügten Absorberrohres (3) eingebracht und mit diesen fest verbunden wird.

23. Verfahren nach Anspruch 21,
**dadurch gekennzeichnet, dass**
wenigstens ein Randsteg (4, 5) eines Verbindungsabschnittes (2a, 2b) zu einem einstückig mit dem Verbindungsabschnitt (2a, 2b) ausgebildeten vorgeformten oder fertig ausgeformten sowie wasser- und/oder luftdicht zu einem im Querschnitt geschlossenen Hohlprofil gefügten Absorberrohr (3) mit Anschlußsteg (7) geformt und mit dem benachbarten Randsteg (4, 5) fest verbunden wird.

24. Verfahren nach einem der Ansprüche 21 bis 23,
**dadurch gekennzeichnet, dass**
wenigstens einer der benachbarten Randstege (4, 5) derart ausgebildet wird, dass dieser den Anschlußsteg (7) des Absorberrohres (3) überlappt respektive abdeckt.

25. Verfahren nach Anspruch 21,
**dadurch gekennzeichnet, dass**
benachbarte Randstege (4, 5) zu einem Stegverbund stumpf aneinander gefügt werden, an welchem seitlich ein Anschlußsteg (7) eines gesondert gefertigten Absorberrohres (3) in Form eines vorgeformten oder bereits fertig ausgeformten sowie wasser- und/oder luftdicht zu einem im Querschnitt geschlossenen Hohlprofil gefügten Absorberrohres (3) befestigt wird.

26. Verfahren nach einem der Ansprüche 21 bis 25,
**dadurch gekennzeichnet, dass**
die Verbindungsabschnitte (2a, 2b) sowie die gesondert gefertigten Absorberrohre (3) samt Anschlußsteg (7) jeweils in ein oder mehreren Umformschritten aus einer Ausgangsplatine ausgeformt werden.

27. Verfahren nach einem der Ansprüche 21 bis 26,
**dadurch gekennzeichnet, dass**
die ausgeformten Absorberrohre (3) vorzugsweise im Bereich ihres ausgebildeten Anschlußsteges (7) zu einem im Querschnitt geschlossenen Hohlprofil gefügt werden.

28. Verfahren nach einem der Ansprüche 21 bis 27,
**dadurch gekennzeichnet, dass**
als Fügeverfahren zur festen Verbindung der Verbindungsabschnitte (2a, 2b) und der Absorberrohre (3) untereinander zu besagtem plattenförmigen Strahlungsabsorber (1) sowie zur Erstellung eines im Querschnitt geschlossenen Hohlprofils der Absorberrohre (3) jeweils ein geeignetes Schweiß- oder Lötverfahren verwendet wird.

29. Verfahren nach einem der Ansprüche 21 bis 28,
**dadurch gekennzeichnet, dass**
die Umformung der Ausgangsplatinen respektive Ausformung der Verbindungsabschnitte (2a, 2b) und Absorberrohre (3) vorzugsweise durch Rollformen realisiert wird.

30. Verfahren nach einem der Ansprüche 21 bis 29,
**dadurch gekennzeichnet, dass**
die Oberfläche der Verbindungsabschnitte (2a, 2b) und/oder Absorberrohre (3) weitestgehend glatt oder konturiert ausgebildet wird.

31. Verfahren nach einem der Ansprüche 21 bis 30,
**dadurch gekennzeichnet, dass**
zunächst vorgeformte Absorberrohre (3) vermittels Innen-Hochdruck-Umformung (IHU) in ihre endgültige Form überführt werden.

32. Verfahren nach einem der Ansprüche 21 bis 31,
**dadurch gekennzeichnet, dass**
die endgültig ausgeformten Absorberrohre (3) weitestgehend mit einem Querschnitt versehen werden, der auf die Grundgeometrie eines Polygons, einer Ellipse oder auf jede andere, einen geschlossenen Querschnitt darstellende Grundgeometrie, vorzugsweise jedoch auf die Grundgeometrie eines Kreises, zurückgeführt ist.

33. Verfahren nach einem der Ansprüche 21 bis 32,
**dadurch gekennzeichnet, dass**
die Absorberrohre (3) endseitig an gemeinsame Sammelrohre (8) angeschlossen werden.

34. Verfahren nach Anspruch 33,
**dadurch gekennzeichnet, dass**
die Sammelrohre (8) mit Aussparungen (9a; 10) versehen werden, in denen die Absorberrohre (3) einmünden.

35. Verfahren nach einem der Ansprüche 33 und 34,
**dadurch gekennzeichnet, dass**
die luft- und/oder wasserdichte Verbindung zwischen den Absorberrohren (3) und den Sammelrohren (8) vermittels an sich bekannter Nippelelemente realisiert wird.

36. Verfahren nach einem der Ansprüche 33 und 34,
**dadurch gekennzeichnet, dass**
in den Sammelrohren (8) zu den Absorberrohren (3) korrespondierende Aussparungen (10) eingebracht werden, die ihrerseits eine Schlitzverbindung (11) zur formschlüssigen Aufnahme eines Endabschnittes des Absorberrohres (3) samt Anschlußsteg (7) aufweisen, wobei das Absorberrohr (3) mit einer Durchströmöffnung versehen wird.

37. Verfahren nach einem der Ansprüche 21 bis 32,
**dadurch gekennzeichnet, dass**
benachbarte Absorberrohre (3) derart vermittels Nippelelementen strömungstechnisch verbunden werden, dass ein mäanderförmig geführtes Absorberrohr (3) ausgebildet wird.

38. Verfahren nach einem der Ansprüche 33 bis 37,
**dadurch gekennzeichnet, dass**
Absorberrohre (3) mit den Sammelrohren (8) oder untereinander respektive über Nippelelemente nach einem Lötverfahren gefügt werden.

39. Verfahren nach einem der Ansprüche 21 bis 38,
**dadurch gekennzeichnet, dass**
die Absorberrohre (3), Verbindungsabschnitte (2a, 2b) und/oder Sammelrohre (8) aus einem metallenen Werkstoff, vorzugsweise aus Kupfer hergestellt werden.

40. Verfahren nach einem der Ansprüche 21 bis 39,
**dadurch gekennzeichnet, dass**
dass Verbindungsabschnitte (2a, 2b) verwendet werden, die mindestens einseitig beschichtet sind.
